# EUROPEAN PATENT APPLICATION

(11) **EP 0 765 889 A1**
(43) Date of publication of application: **02.04.1997**
(21) Application number: 96115640.3
(22) Date of filing: 30.09.1996
(51) Int. Cl.: C08F 220/12, C08F 230/02, C09J 143/02

(54) **Polymeric adhesive and flame-retardant compositions**

(30) Priority: 30.09.1995 GB 9519983; 30.09.1995 GB 9520043; 05.07.1996 GB 9614187; 05.07.1996 GB 9614185
(71) Applicant: ALBRIGHT & WILSON UK LIMITED, Oldbury, Warley, West Midlands B68 0NN (GB)
(72) Inventor: Zakikhani, Mohsen, Harborne, Birmingham B17 8RD (GB); Davis, John, Worcester, Hereford & Worcs. WR3 7NL (GB)
(74) Representative: Savidge, Roger Gordon Madgwick

(57) **Abstract**

Adhesive and flame-retardant polymeric compositions comprise (i) an acrylate monomer such as methyl methacrylate; (ii) an alkylene acrylate phosphate monomer such as ethylene methacrylate phosphate; and optionally (iii) a free-radical initiator. They can be used as, or with, adhesives or flame-retardants for glass, plastics laminates, in sizing or in composites, especially if optical clarity is required.

## Description

The present invention provides polymeric compositions which comprise the reaction product of an acrylate monomer and an alkylene acrylate phosphate monomer, in particular polymeric compositions which comprise the reaction product of methyl methacrylate and an alkylene methacrylate phosphate, eg, ethylene methacrylate phosphate. The polymeric compositions of the invention, when made in situ, show excellent adhesion to surfaces such as glass and metal, are clear in appearance, may be cast or moulded for certain applications and may also be used in applications such as laminating or sizing. The polymeric compositions of the invention also show excellent flame-retardant properties.

The present invention also provides the use of the aforementioned polymeric compositions as, or in connection with adhesives.

The present invention further provides the use of the aforementioned polymeric compositions as, or in connection with flame retardants.

Certain polyacrylate based compositions, eg, those based on ethyl acrylate, n-butyl acrylate or 2-ethylhexyl acrylate, are known to exhibit adhesive properties. It is also known that minor quantities of other monomers such as methyl methacrylate may be co-polymerised with the above acrylate monomers. This may be done, for example, to modify the glass transition temperature (Tg) of the polyacrylate in order to optimise adhesive properties.

Flame retardants are incorporated into many products on the grounds of safety in order to control the spread of fire through the product. Flame retardants can, for example, act by causing rapid extinguishing of flames, or by making the product difficult to set alight. Whilst flame retardants have conventionally been used to treat fabrics, soft furnishings etc, and have been incorporated inter alia into paints and resins such as epoxy resins, many other applications are now being actively pursued, especially within the electronic, automotive, aerospace and construction industries. Compositions having flame retardant properties are therefore of increasing importance in many applications.

However, poly (methyl methacrylate) or PMMA as it is referred to herein, and which is commonly known as Perspex^{*1}, has no appreciable adhesive or flame-retardant properties. Typically, PMMA, which is a clear polymer, may be used in the form of cast sheets for objects such as rulers and safety screens, and also in moulded form for items such as light fittings. PMMA is also used as a laminating composition in order to render items shatterproof and also finds use in sizing applications.
* PERSPEX is a Trade Mark

Alkylene acrylate phosphates, especially alkylene methacrylate phosphates are polymerisable organic phosphates which are known to exhibit some adhesive behaviour relative to surfaces such as glass and metal. In particular, ethylene methacrylate phosphate or EMP as it is referred to herein, may be used in minor amounts in adhesive compositions as an adhesion promotor, eg, as disclosed in US Patent 4433124. They have also been used to impart flame retardant properties to textiles such as silk, eg, as disclosed in EP-0-527-078.

Some poly (acrylates), eg PMMA, have no appreciable inherent adhesive properties relative to surfaces, and thus they require the use of a separate adhesive composition wherever an adhesive bond is to be formed. This may be unsightly or the bond may be of low strength which may be insufficient for the application concerned. Thus, there is a requirement to provide a poly (acrylate) composition which exhibits excellent adhesive properties relative to surfaces and which furthermore is preferably substantially clear in appearance.

Furthermore, poly (acrylates), such as PMMA, exhibit no inherent flame retardant properties. Furthermore, in order to impart such properties, the introduction of well known flame retardant systems, such as the combination of organic halogen compounds with antimony oxide results in a hazy or opaque appearance of the polymer. This feature obviously limits the use of said polymer in applications which require both clarity and flame retardant properties, eg safety screens and certain types of light fittings. In addition, it is generally known that additives, eg, flame retardant additives which are unreacted with the host polymer, tend to adversely affect other physical properties. Therefore, there is a requirement to provide polymeric compositions which exhibit excellent flame retardant properties, and which are also substantially clear in appearance, and which exhibit excellent physical properties.

We have now discovered that a polymeric composition comprising the reaction product of an acrylate monomer and an alkylene acrylate phosphate monomer, eg, the reaction product of methyl methacrylate and EMP, exhibits excellent flame retardant properties.

We have further discovered that the polymeric composition described in the immediately preceding paragraph is substantially clear in appearance, and exhibits excellent physical properties.

We have also discovered that polymeric compositions comprising the partial or full reaction product of an acrylate monomer and an alkylene acrylate phosphate monomer, exhibit excellent adhesion properties to surfaces such as glass or metal when said acrylate monomer comprises 99.5% by weight maximum of said polymeric composition and 0.5% by weight minimum of said alkylene acrylate phosphate monomer. Furthermore said polymeric composition is likewise substantially clear in appearance.

We have further discovered that the polymeric composition recited in the immediately preceding paragraph may be used as a one-part, (ie, fully formulated), or a two-part adhesive, for surfaces such as glass and metal.

We have yet further discovered that the partial reaction product of the aforementioned acrylate monomer and alkylene acrylate phosphate monomer may be used in the form of a pre-polymer for conversion into the full reaction product when required.

We believe, although we do not wish to be limited thereby, that the polymer compositions of the invention are cross linked systems of the two monomers. Typically and suprisingly, the polymers of the present invention exhibit an extremely strong adhesive bond, and during attempts to remove the polymer from a glass plate, a layer of the glass may actually be removed rather than the adhesive bond fail. The adhesive bond strength of the polymeric compositions of the present invention is typically greater than the cohesive strength of the glass to which said polymeric composition is applied.

We have also found that the acrylate monomer (i) may itself comprise more than one component, for example one or more further acrylate monomers or vinyl-containing monomers, and that castings and prepolymers made according to the present invention have an enhanced glass transition temperature. This results in a concomitant increase in the temperature range within which the casting or pre-polymer remains workable and thus to an overall increase in the dimensional stability of articles made from the compositions of the present invention.

In a preferred embodiment of the present invention, the polymerisable acrylate entity (i) may consist essentially of an alkyl-substituted acrylate ester, for example methyl methacrylate.

Alternatively, the polymerisable acrylate entity (i) may comprise a first component which is an alkyl-substituted acrylate ester, e.g. methyl methacrylate, and a second component comprising one or more unsaturated compounds co-polymerisable with the first component.

The second component may also be an alkyl-substituted acrylate ester, e.g. n-butyl acrylate or n-butyl methacrylate. Alternatively, the second component may contain one or more vinyl groups (e.g. styrene).

Suitably, the alkylene acrylate phosphate monomer (ii) consists essentially of ethylene methacrylate phosphate.

The amount of methacrylate phosphate present in the compositions of the present invention is an effective amount of up to 40%, suitably from 1% to 38% and especially from 3% to 35%, by total weight of the composition.

Accordingly in a first embodiment, the present invention provides a flame-retardant or adhesive polymeric composition comprising the partial or full reaction product of:
(i) an acrylate monomer, and
(ii) an alkylene acrylate phosphate monomer, and
(iii) optionally, a free radical initiator

In a second embodiment, the present invention provides the use of a polymeric composition comprising the partial or full reaction product of:
(i) an acrylate monomer, and
(ii) an alkylene acrylate phosphate monomer, and
(iii) optionally, a free radical initiator
as, or in connection with, flame retardant or adhesive compositions.

In a third embodiment, the present invention provides a flame-retardant or adhesive polymeric composition comprising the partial or full reaction product of:
(i) an acrylate monomer, and
(ii) an alkylene acrylate phosphate monomer
(iii) optionally, a free radical initiator,
wherein said polymeric composition is substantially clear in appearance.

In a fourth embodiment, the present invention provides a polymeric adhesive composition comprising the partial or full reaction product of:
(i) 99.5% by weight maximum of an acrylate monomer, and correspondingly;
(ii) 0.5% by weight minimum of an alkylene acrylate phosphate monomer, and
(iii) optionally 5% by weight maximum of a free radical initiator.
all weights being based upon the total weight of said reaction product.

In a fifth embodiment, the present invention provides the use of a polymeric composition comprising the partial or full reaction product of:
(i) 99.5% by weight maximum of an acrylate monomer, and correspondingly;
(ii) 0.5% by weight minimum of an alkylene acrylate phosphate monomer, and
(iii) optionally 5% by weight maximum of a free radical initiator
all weights being based upon the total weight of the reaction product as, or in connection with, adhesive compositions.

The polymeric composition may comprise the partial or full reaction product of any suitable acrylate monomer and any suitable alkylene acrylate phosphate monomer. Particularly preferred are the reaction products of methyl methacrylate and ethylene methacrylate phosphate.

The polymeric composition may be prepared either by producing the aforementioned reaction product in situ in a one stage process, or by producing the corresponding partial reaction product as a 'pre-polymer', wherein said prepolymer is converted to the full reaction product as required.

Any polymerisable acrylate monomer may be used in the preparation of the aforementioned reaction product. Particularly preferred acrylate monomers, according to the present invention, are alkyl acrylate monomers, eg methyl methacrylate.

The acrylate monomer is typically present in said reaction product in an amount of from 40% to 99.5% by weight based on the total weight of the reaction product, preferably 50% to 95% by weight, most preferably 55% to 90% by weight, eg, 60% to 80% by weight.

The alkylene acrylate phosphate may be any polymerisable alkylene acrylate phosphate monomer such as EMP.

The alkylene acrylate phosphate is typically present in said reaction product in an amount sufficient to provide flame-retardant or adhesive properties. Said alkylene acrylate phosphate is typically present in the reaction product in an amount of from 0.5% to 60% by weight based on the total weight of the reaction product, preferably 5% to 50% by weight, most preferably 10% to 45% by weight, such as 20% to 40% by weight.

The reaction product of the acrylate monomer and the alkylene acrylate phosphate monomer may be present in the polymeric composition in any amount up to 100% by weight, based on the total weight of the polymeric composition. Typically said reaction product is present in said polymeric composition in an amount of from 75% to 100% by weight, preferably 80% to 99.9%, preferably 85% to 99.5%, eg, 90% to 99%.

The acrylate monomer and the alkylene acrylate phosphate monomer may be reacted together by any suitable method to produce the polymeric composition of the present invention. A particularly preferred method of producing said polymeric composition is to mix the acrylate monomer and the alkylene acrylate phosphate together, in the presence of a suitable amount of a free radical initiator if required to initiate the reaction. The reaction may be effected by maintaining the reaction mixture at a suitable temperature for a suitable reaction time.

The reaction to produce the polymeric composition may typically be undertaken by maintaining the reaction mixture at 20°C to 100°C, preferably 40°C to 80°C, most preferably 55°C to 70°C for a suitable reaction time, typically for a reaction time of up to 50 hours, preferably 10 to 30 hours, most preferably 15 to 25 hours, or until the reaction between the acrylate phosphate monomer and the alkylene acrylate phosphate monomer is complete. Obviously the reaction time and temperature are dependent upon each other and upon the free radical initiator employed. Alternatively, the reaction may be initiated by any other suitable means, for example by subjecting the reaction mixture to a radiation source such as UV or ionising radiation, or by ultrasound, heat or any other non-chemical means.

The polymer may be typically produced as either cast sheets or as a moulded item. The moulds or casting cells may be made of any suitable material to which the polymer does not adhere, or which is treated with any such material.

Any suitable conventional free radical initiator may be used according to the present invention to initiate the reaction. Suitable examples include amongst others, alkyl or alkoyl peroxides, eg tertiary butyl peroxide, hydroperoxides, benzoyl peroxide, hydrogen peroxide and azobisisobutyronitrile. Typically, the free radical initiator will be present in amount of up to 5% by weight, preferably up to 3%, most preferably up to 2%, eg, 1% such as 0.2% based on the total weight of the acrylate and alkylene acrylate phosphate monomers. The free radical initiator may be added to the reaction mixture either as a single addition or in aliquots during the reaction. Preferably the initiator is added as a single addition. Alternatively, although less preferably, the free radicals may be generated by the use of UV radiation, ionising radiation, ultrasound, heat or any other non-chemical means.

The polymeric compositions of the present invention may further comprise one or more additional ingredients as required by the particular application to which the compositions are put, for instance minor amounts of dyestuffs. It is preferred that if such optional ingredients are present the total amount thereof is less than 10% by weight based on the total weight of the polymeric composition, preferably less than 5% by weight, most preferably less than 3% by weight.

The polymeric compositions of the present invention may be used whenever an adhesive composition is required, especially where an adhesive polymeric composition having excellent adhesion properties relative to surfaces such as glass and metal is required, and most especially where the adhesive composition is also required to be substantially clear in appearance. Examples of the use of the adhesive polymeric compositions of the present invention include, amongst others, as an adhesive for surfaces to other different or identical surfaces, for example as an adhesive for glass and/or metal components, and also as, or in connection with, a laminate for glass and plastics to render them shatterproof. The polymeric compositions may in some circumstances be used to etch or shape glass, by the removal of a layer thereof.

The polymeric compositions of the present invention may also be used whenever a composition having flame retardant properties is required especially where such a composition is required to be substantially clear in appearance. Examples of the use of the flame retardant compositions of the present invention include, amongst others, use of the polymeric compositions as, or in connection with flame retardants, eg as flame retardant light fittings or safety screens; and also as, or in connection with a laminate for glass and plastics to render them shatterproof. Furthermore the polymeric compositions may also find application in the sizing of glass and hence glass reinforced composites, including particulate and fibrillar composites where a degree of flame retardancy is required.

Furthermore, the polymeric compositions may also find application in the sizing of glass and hence in glass reinforced composites, including particulate and fibrillar composites. The polymeric compositions may also find use as sealants, where excellent adhesion to glass and/or metal and other such surfaces is required.

The present invention will be further illustrated by reference to the following examples:-

Examples 1 and 2 relate to flame-retardant polymeric compositions according to the present invention.

### EXAMPLE 1 - Preparation of the reaction product of methyl methacrylate and ethylene methacrylate phosphate

Methyl methacrylate (30g) and EMP (10g) were thoroughly mixed together, in the presence of azobisisobutyronitrile initiator (AIBN)(0.2%). The mixture was poured into a PTFE casting shell measuring approximately 145mm x 105mm x 7mm, which had silicone tubing sides. The cell was kept in a water bath at 60°C for 2 hours, and at 65°C for a further 18 hours.

At the end of the reaction period the casting cell was dismantled and the cast, reaction product was removed. Said reaction product was clear in appearance and comprised approximately 74.85% of the methyl methacrylate monomer 24.95% ^{w}/_{w} of the EMP monomer and 0.2% ^{w}/_{w} initiator, all amounts being based on the total weight of the reaction product.

### EXAMPLE 2 - Flame retardant properties of the reaction product

A series of methyl methacrylate/EMP mixtures were prepared according to the method of Example 1, the compositions of the mixtures being given in Table 1 below. Each mixture comprised the methyl methacrylate and EMP to a total weight of 40g. After reaction of the mixture, and removal of the reaction product from the cell, each sample was tested for flame retardancy according to the UL-94 vertical burning test (Underwriters Laboratories Inc), and also to the Limiting Oxygen Index Test (ASTM D2863-77). The results of each of the aforementioned tests are given in table 1 below.

**TABLE 1**

| Flame retardant results of the methyl methacrylate and EMP reaction products as tested according to the UL94 vertical burn tests and the limiting oxygen test | | | | | | |
|---|---|---|---|---|---|---|
| Sample | Formulation (% w/w) | | | % P | L.O.I.*1 (%O₂) | UL-94 (3.2mm) |
| | Methyl Methacrylate | EMP | AIBN | | | |
| 1 | 100 | 0 | 0.2 | 0 | <20.9 | NR * |
| 2 | 93.75 | 6.25 | 0.2 | 0.63 | <20.9 | NR |
| 3 | 87.5 | 12.5 | 0.2 | 1.26 | 21 | NR |
| 4 | 81.25 | 18.75 | 0.2 | 1.89 | 22.4 | NR |
| 5 | 75 | 25 | 0.2 | 2.53 | 24.4 | NR |
| 6 | 70 | 30 | 0.3 | 3.03 | 25.2 | NR |
| 7 | 68.75 | 31.25 | 0.2 | 3.16 | 25.4 | V-O |
| 8 | 62.5 | 37.5 | 0.2 | 3.79 | 26.8 | V-O |
| 9 | 62.5 | 37.5 | 0.4 | 3.79 | 27.2 | V-O |

| | | | | | | |
|---|---|---|---|---|---|---|
| * NR Not rated, ie, failed to satisfy the criteria of V-O, V-1 or V-2 of this test. | | | | | | |

The results in Table 1 show that reaction products containing a minimum of 12.5% EMP show a reduction in flammability as demonstrated by higher Limiting Oxygen Index values *1. Moreover reaction products containing a minimum of 31.25% EMP are sufficiently flame retardant to pass the UL-94 Vertical Burning Test at the highest rating, ie V-O.

Examples 4 to 6 relate to adhesive polymeric compositions according to the present invention.

### EXAMPLE 4 - Preparation of the reaction product of methyl methacrylate and ethylene methacrylate phosphate

Methyl methacrylate and EMP were thoroughly mixed together in the amounts and proportions given below in Table II, in the presence of the azobisisobutyronitrile initiator. The mixture was poured in to a glass casting shell with silicone tubing sides measuring approximately 160mm x 100mm x 3.2mm, and allowed to polymerise at 60°C for 2 hours, and at 65°C for a further 18 hours in a waterbath.

At the end of the reaction period the casting cell was dismantled and the cast, reaction product removed.

**TABLE II**

| Compositions of the reaction product and adhesion properties thereof to glass | | | | | | |
|---|---|---|---|---|---|---|
| Sample No | Methyl Methacrylate (g) | EMP (g) | Initiator (g) | Methyl % ^{w}/_{w} Methacrylate | EMP % ^{w}/_{w} | % Initiator |
| A | 40 | 0 | 0.08 | 99.8 | 0 | 0.2 |
| B | 37.5 | 2.5 | 0.08 | 93.56 | 6.23 | 0.2 |
| C | 30 | 10 | 0.08 | 74.85 | 24.95 | 0.2 |

Example A, was easily removed from the glass casting cell and exhibited no adhesive properties to the glass.

Example B, was difficult to remove from the glass casting cell. One glass plate was prised away from the reaction product, but a layer of glass from the glass plate was removed in doing so.

Thus Example B exhibits good adhesion properties to glass.

Example C could not be removed from the glass casting cell as the reaction product and glass plates could not be separated by the normal method of removal, and could not be prised apart manually. Thus, Example C exhibits excellent adhesion properties to glass.

All of the above examples were obtained as a solid plaque of the reaction product which was transparent in appearance.

### EXAMPLE 5 - Adhesive strength of the reaction product of methyl methacrylate and EMP

The adhesive strength of the bond of the reaction product of methyl methacrylate and EMP, wherein the reaction product which comprised approximately 67.36% methyl methacrylate and 32.43% EMP based on the amount of methyl methacrylate and EMP, was tested according to the method given below. The results are given in Table III below.

The reaction product was prepared by mixing together methyl methacrylate (13.5g), EMP (6.5g), and azoisobutyronitrile initiator (0.04g) immediately prior to the addition of the mixture to the glass slides.

### Method

Ten glass microscope slides were treated with toluene followed by acetone and drying. Three drops of the methyl methacrylate, EMP and initiator mixture were added to one end of one slide, and another slide placed onto said mixture to produce a lap joint with an approximate area of 25mm x 25mm. Five samples were prepared according to this method. The jointed glass slides were placed in an oven at 60°C for 2 hours, followed by 65°C for 18 hours, to allow the reaction product to form. After this period the jointed glass slides were removed from the oven and allowed to cool at room temperature for 24 hours prior to testing for adhesive strength.

The jointed glass slides were tested on a Hounsfield tensile tester model H50KM fitted with a 50,000N load cell and using a cross-head speed of 5mm/minute. The samples were subjected to an increasing tensile force, with the tensile force required to remove the reaction product from the glass, or to break the glass slides, recorded.

**TABLE III**

| Maximum tensile force applied to the glass slides. | |
|---|---|
| Sample No | Maximum tensile force applied to the jointed Glass Slides |
| 1 | 760 N |
| 2 | 870 N |
| 3 | 960 N |
| 4 | 915 N |
| 5 | 800 N |

For each of Examples 1 to 5, the glass slides broke above or below the joint section, or in the section of the slide which was clamped into the tensile tester. However, in all cases the joint remained intact, indicative of an excellent adhesive bond formed by the reaction product to the glass.

### EXAMPLE 6 - Comparative example

A comparative example, containing no EMP was prepared according to the method of preparation of Example 2. After storage in the oven for the stated time, no bond had been formed between the PMMA and the glass slides, and thus the example could not be tested for adhesive strength. Thus, in the absence of EMP, the PMMA polymer exhibited no adhesive properties to glass.

Examples 7 to 16 show the enhanced glass transition temperatures of polymers according to the present invention:

The following abbreviations are used herein:
- PMMA: = polymethyl methacrylate
- MMA: = methyl methacrylate
- EMP: = ethylene methacrylate phosphate

### EXAMPLES 7 to 16

### Glass transition temperatures of methyl methacrylate/EMP castings

Glass transition temperatures (Tg) of MMA-EMP castings have been determined on a Perkin-Elmer DSC-7 Differential Scanning Calorimeter using a heating rate of 5°C min⁻¹. The samples were first annealed by heating up to 180°C at this rate and then cooling at 15°C min⁻¹. Subsequent heating runs then displayed clear transitions. Sample sizes were typically around 8mg.

The Tg figures shown in Table IV below are the mean of two determinations made for each sample.

**TABLE IV**

| **EX No** | **DESCRIPTION** | **EMP (wt %)** | **Mean Tg (°C)** |
|---|---|---|---|
| Controls | Commercial PMMA sheet | 0 | 95.2 |
| | MMA casting from monomers | 0 | 95.0 |
| | MMA casting from monomers | 0 | 93.6 |
| 7 | MMA-EMP casting from monomers | 3 | 102.4 |
| 8 | | 5 | 102.8 |
| 9 | | 8 | 102.5 |
| 10 | | 12.5 | 109.9 |
| 11 | | 18.75 | 108.3 |
| 12 | | 32.5 | 109.6 |
| 13 | MMA-EMP casting from prepolymer | 5 | 99.8 |
| 14 | | 10 | 99.8 |
| 15 | | 20 | 102.0 |
| 16 | | 30 | 104.5 |

The results indicate that even for EMP contents of less than 10% there is a significant increase in Tg. The casting obtained from prepolymers (Examples 13 to 16) exhibited lower transition temperatures than the castings made from simple monomer blends (Examples 7 to 12).

## Claims

1. A flame-retardant or adhesive polymeric composition comprising the partial or full reaction product of:
(i) an acrylate monomer and
(ii) an alkylene acrylate phosphate monomer, and
(iii) optionally a free radical initiator.

2. A polymeric composition according to Claim 1, characterised in that said acrylate monomer is methyl methacrylate.

3. A polymeric composition according to Claim 1 or 2, characterised in that said alkylene acrylate phosphate monomer is ethylene methacrylate phosphate.

4. A polymeric composition according to any one of Claims1 to 3, characterised in that said acrylate monomer is present in said reaction product in an amount of from 40% to 99.5% by weight based on the total weight of the reaction product for example 50% to 95% by weight, 55% to 90% by weight, or 60% to 80% by weight.

5. A polymeric composition according to any one of Claims 1 to 4, characterised in that said alkylene acrylate phosphate monomer is present in said reaction production in an amount of from 0.5% to 60% by weight based on the total weight of the reaction product, for example 5% to 50% by weight, 10% to 45% by weight, or 20% to 40% by weight.

6. A polymeric composition according any one of Claims 1 to 5, characterised in that said reaction product is present in said polymeric composition in an amount up to 100% by weight, for example 50% to 100% by weight, 70% to 99.9% by weight, or 85% to 99.5% by weight.

7. A polymeric composition according to any one of Claims 1 to 6, characterised in that said polymeric composition is produced by maintaining the reaction mixture at 20°C to 100°C for up to 50 hours, for example 40°C to 80°C for 10 to 30 hours, or 55°C to 70°C for 15 to 25 hours.

8. A polymeric composition according to any one of Claims 1 to 7, characterised in that said free radical initiator is present in said reaction product in an amount of up to 3% by weight, based on the total weight of the acrylate and alkylene acrylate phosphate monomers, for example up to 2% by weight, or up to 1% by weight.

9. A polymeric composition according to any one of Claims 1 to 8, characterised in that said free radical initiator is added to the reaction mixture either as a single addition or in aliquots.

10. A polymeric composition according to any one of Claims 1 to 9, characterised in that said free radical initiator is a radiation, heat or other non-chemical source.

11. A polymeric composition according to any one of Claims 1 to 10, characterised in that said polymeric composition further comprises one or more additional ingredients in an amount of less than 10% by weight based on the total weight of said polymeric composition, for example less than 5% by weight, or less than 3% by weight.

12. A polymeric composition according to Claim 11, characterised in that said additional ingredient comprises a dyestuff, or a nitrogen-containing flame retardant.

13. A polymeric composition according to any one of Claims 1 to 12, characterised in that said polymeric composition is substantially clear in appearance.

14. The use of a polymeric composition according to any one of Claims 1 to 13 as, or in connection with flame retardant, a flame retardant additive, a laminate for glass and/or plastic materials, or in the sizing of glass and/or glass reinforced composites.

15. The use of a polymeric composition according to any one of Claims 1 to 14 as a part reaction product pre-polymer for conversion into the full reaction product.

16. A polymeric composition according to any one of Claims 1 to 15, said composition comprising the partial or full reaction product of:
(i) 99.5% by weight maximum of an acrylate monomer, and correspondingly;
(ii) 0.5% by weight minimum of an alkylene acrylate phosphate monomer, and
(iii) optionally 5% by weight maximum of a free radical initiator,
all weights being based upon the total weight of said reaction product, wherein said polymeric composition exhibits adhesive properties

17. The use of a polymeric composition according to Claim 16 to etch or shape glass, in the sizing of glass and/or glass reinforced composites, as a sealant, as a one part or two part adhesive, or as a part reaction product pre-polymer for conversion into the full reaction product.

18. A composition according to any one of Claims 1 to 13 or to Claim 16, characterised in that the acrylate monomer (i) comprises a first component which is an alkyl-substituted acrylate ester and a second component comprising one or more unsaturated compounds co-polymerisable with the first component.

19. A composition according to Claim 18, characterised in that the second component is also an alkyl-substituted acrylate ester, for example n-butyl acrylate or n-butyl methacrylate.

20. A composition according to Claim 18, characterised in that the second component is one containing one or more vinyl groups, for example styrene.
